# EUROPÄISCHE PATENTSCHRIFT

(11) **EP 3 829 843 B1**
(45) Veröffentlichungstag und Bekanntmachung des Hinweises auf die Patenterteilung: **23.08.2023**
(21) Anmeldenummer: 19740559.0
(22) Anmeldetag: 16.07.2019
(51) Int. Cl.: B29B 9/10, B29B 13/10, B29B 9/12, B29B 9/16

(54) **VERFAHREN UND VORRICHTUNG ZUM ZERKLEINERN EINES THERMOPLASTISCHEN POLYMERS UND ZUR HERSTELLUNG EINES PULVERFÖRMIGEN STOFFS DARAUS**
METHOD AND DEVICE FOR COMMINUTING A THERMOPLASTIC POLYMER AND FOR PRODUCING A POWDERED MATERIAL THEREFROM
PROCÉDÉ ET DISPOSITIF POUR BROYER UN POLYMÈRE THERMOPLASTIQUE ET POUR PRODUIRE UNE MATIÈRE PULVÉRULENTE À PARTIR DE CELUI-CI

(30) Priorität: 03.08.2018 DE 102018118913
(43) Veröffentlichungstag der Anmeldung: 09.06.2021
(73) Patentinhaber: Dressler Group GmbH & Co. KG, 53340 Meckenheim (DE)
(72) Erfinder: OTTEN, Dittmar, 53347 Alfter (DE)
(74) Vertreter: Patentanwälte Bauer Vorberg Kayser
(86) Internationale Anmeldenummer: PCT/EP2019/069103
(87) Internationale Veröffentlichungsnummer: WO 2020/025312

(56) Entgegenhaltungen:
- EP-A2- 1 754 725
- WO-A1-2018/113955
- DE-A1- 4 319 990
- DE-A1-102011 080 233
- DE-U1-202016 106 243
- US-A1- 2011 223 413
- US-B1- 6 171 433

## Beschreibung

Die Erfindung bezieht sich auf ein Verfahren und eine Vorrichtung zum Zerkleinern eines thermoplastischen Polymers und Herstellen eines pulverförmigen Stoffs daraus.

Angestrebt werden Korngrößen kleiner 500, insbesondere kleiner 100 µm, z.B. Partikel im Bereich 30 bis 100 µm. Als maximale Obergrenze können 800 µm angegeben werden. Die Untergrenze liegt im Bereich weniger Nanometer, vorzugsweise bei etwa 1 oder 10 µm. Die Abweichung von der Kugelform soll möglichst so sein, dass die kleinste Querschnittsabmessung einer Partikel nicht kleiner ist als 20, vorzugsweise nicht kleiner ist als 50 % der größten Querschnittsabmessung dieser Partikel.

Derartiges pulverförmiges Material wird für viele Einsatzzwecke benötigt, beispielsweise für 3D-Druck, für Pulverbeschichtung usw.. Je kugelförmiger die einzelnen Partikel sind, umso fließfähiger ist das Pulver. Derartiges Pulver wird vom Markt in jeweils gewünschten, für die einzelnen Einsatzzwecke vorgegebenen Kornverteilungen benötigt. Für die Herstellung eines konkreten Pulvers wird ein stückig vorliegendes Ausgangsmaterial in Form eines thermoplastischen Polymers zunächst in einem Zerkleinerungsschritt zu einem Ausgangspulver zerkleinert, das Ausgangspulver wird anschließend in mindestens einem Siebvorgang so gesiebt, dass die gewünschte Kornverteilung, auch Pulververteilung oder Körnungsband genannt, erreicht wird. Dieses finale Pulver wird dann verpackt und ausgeliefert. Aus DE 20 2016 106 243 U1 ist eine Vorrichtung zur Herstellung von derartigen pulverförmigen Stoffen bekannt. Dabei wird eine heiße Schmelze des Ausgangsprodukts Kunststoff einer Düseneinrichtung zugeleitet, aus der die Schmelze austritt und sich zu kleinen Tröpfchen vereinzelt, die nach unten herunterfallen. Diese werden mittels Cryogas abgekühlt und in einem unteren Bereich gesammelt. Es folgt ein Sieben und Verpacken.

Weiterhin ist es bekannt, das Ausgangsprodukt Kunststoff zunächst in einem Lösungsmittel aufzulösen und daraus die Partikel zu gewinnen, beispielsweise die erhaltene Lösung zu zerstäuben bzw. zu versprühen und die erhaltenen Tröpfchen so lange isoliert zu halten, bis das Lösungsmittel im Wesentlichen verdampft ist. Bei diesem Verfahren ist es nicht notwendig, den Kunststoff auf höhere Temperatur zu bringen, sodass chemische Veränderungen insoweit nicht zu befürchten sind. Es wirkt jedoch das Lösungsmittel auf den Kunststoff ein.

Im industriellen Einsatz sind Vorrichtungen und Verfahren zum Mahlen und zur Herstellung von Pulvern. WO 2007/008480 A1 beschreibt ein Verfahren zum Mahlen bei Cryotemperatur und Herstellen eines Pulvers, in der Beschreibungseinleitung wird auf mehreren Seiten der bekannte Stand der Technik zum Cryomahlen ausführlich beschrieben. EP 2 957 598 A1 offenbart ein Verfahren zur Herstellung von Polyamiden, die mittels einer cryogenen Mahlung in Pulver überführt werden. Anschließend findet ein Siebvorgang statt.

Unter einer cryogenen Temperatur wird im Allgemeinen eine Temperatur unter minus 150 °C verstanden. Für die vorliegende Anmeldung sollen Temperaturen unter -50 °C einbezogen sein, was auch eine Kühlung durch Trockeneis CO2 einschließt.

Es ist auch möglich, den Zerkleinerungsschritt nicht bei tiefen Temperaturen durchzuführen. Ein Mahlen bei tiefen Temperaturen ist in der Regel notwendig, wenn die Glasübergangstemperatur des Polymers unter -20, insbesondere unter - 30 °C liegt, da ansonsten das jeweilige Polymer sich nicht normal zerkleinern lässt.

Die oben genannten Verfahren sind Beispiele für ein Zerkleinern von Kunststoff Ausgangsmaterial zu pulverförmigem Kunststoff. Aus dem Stand der Technik sind weitere Verfahren zum Zerkleinern bekannt.

So ist aus der EP 1 754 725 A2 ein Herstellungsverfahren zur Herstellung eines wasserabsorbierenden Harzes bekannt, bei dem eine stationäre Polymerisation eines Ethylen-ungesättigten Monomers durchgeführt wird, das Acrylsäure und/oder Acrylat enthält. Dabei wird das resultierende wässrige, gelatinöse Polymer geschnitten und getrocknet, wobei das erzeugte Polymer hauptsächlich kantige Teilchen mit 6 glatten Ebenen enthält. Mindestens ein Teil der Oberfläche jedes der Teilchen kann mit einem Adhäsionsblocker vor, nach und/oder zum Zeitpunkt des Schneidprozesses beschichtet werden. Aus der DE 10 2011 080 233 A1 ist ein Verfahren zur Herstellung von Dispersionspulvern mittels Sprühtrocknung von wässrigen Polymerdispersionen und Zugabe von Antiblockmittel bekannt.

Beim Zerkleinern wird in der Regel nicht unmittelbar das pulverförmige Endprodukt erhalten, wie es vom Markt verlangt und gewünscht wird. Der Markt gibt eine Größe und Verteilung der gewünschten pulverförmigen Materialien vor, wie sie zum Beispiel für einen speziellen 3D Drucker benötigt werden. Um die richtige Kornverteilung zu erhalten, werden die pulverförmigen Kunststoffe (das Ausgangspulver), die aus dem Schritt des Zerkleinerns erhalten sind, zumindest einmal gesiebt. Es können mehrere Siebvorgänge nacheinander durchgeführt werden. Dabei ist die Kornverteilung auch von der Art abhängig, wie das Zerkleinern und wie das Sieben erfolgt. Der mindestens eine Siebvorgang wird an den Vorgang des Zerkleinerns angepasst und auf ihn abgestimmt. Er wird weiterhin auf die vorgegebene Kornverteilung angepasst

Je nach dem gewählten Vorgang des Zerkleinerns hat das erhaltene pulverförmige Material eine charakteristische Form der einzelnen Partikel bzw. Körnchen. Die typische Form kann mehr oder weniger von der letztendlich gewünschten Kugelform abweichen. So können die Körnchen unrund sein, zum Beispiel Ansätze (Schwänzchen) haben, relativ flach sein (Plättchen), stabförmig sein oder dergleichen. Dadurch werden der Siebvorgang und das Siebergebnis beeinflusst. Es ist möglich, nach dem Schritt des Zerkleinerns und vor dem Schritt des Siebens ein Verrunden der Körnchen durchzuführen. Hierzu wird beispielsweise auf DE 10 2017 100 981 der Anmelderin verwiesen.

Bei der praktischen Durchführung des Verfahrens hat sich nun gezeigt, dass beim Siebvorgang Probleme auftreten, die vom Zerkleinerungsschritt bedingt sind, insbesondere wenn das Ausgangspulver aus einem thermoplastischen Elastomer erhalten wurde, beispielsweise durch Mahlen von weichem TPU, und eine besondere Klebrigkeit zeigt. Die Durchsatzleistung der Vorrichtung ist häufig stark reduziert. Die Siebvorrichtung neigt zum Verstopfen. Ein wirtschaftlich vernünftiger Siebprozess kann oftmals nicht durchgeführt werden.

Hiervon ausgehend liegt der Erfindung die Aufgabe zugrunde, die bisherigen Verfahren und die bisherigen Vorrichtungen zum Zerkleinern eines thermoplastischen Polymers und Herstellen eines Pulvers daraus dahingehend zu verbessern, dass der Siebvorgang erleichtert und verbessert wird.

Diese Aufgabe wird gelöst durch ein Verfahren mit den Merkmalen des Patentanspruchs 1 und eine Vorrichtung mit den Merkmalen des Patentanspruchs 10.

Mithilfe dieses Verfahrens konnte ein stabiler Siebprozess erreicht werden. Es wurde eine konstante Pulververteilung erreicht. Die Durchsatzleistung erhöhte sich erheblich, beispielsweise um das Zehnfache. Auch das Schüttgewicht des finalen Pulvers erhöhte sich um mindestens 10, meist mindestens 20 %.

Das Verfahren zum Zerkleinern wird nach einem der gängigen Zerkleinerungsverfahren, die aus dem Stand der Technik bekannt sind, durchgeführt. Wichtige Beispiele sind oben genannt. Ein mechanisches Zerkleinern findet in der Regel in einer Mühle statt, hier werden beispielsweise Wirbelstrommühlen, Stiftmühlen, Kugelmühlen oder dergleichen eingesetzt. Bei Einsatz eines Sprühturms wird das Zerkleinern durch Schmelzen oder Auflösen des thermoplastischen Polymers und Zerstäuben im Sprühturm erreicht.

Die vorgegebene Kornverteilung wird im Allgemeinen vom Markt, zumeist von einem konkreten Kunden, vorgegeben. Ein typisches Beispiel für eine Kornverteilung ist d90<125 µm, d50 zwischen 60 und 80 µm, d10 zwischen 20 und 30 µm. Unter einem in stückiger Form vorliegenden Polymer werden Granulate, Stangen, Blöcke, handelsübliche Lieferformen oder andere Formen des Ausgangsmaterials an thermoplastischem Polymer verstanden. Die Stücke des Ausgangsmaterials haben mindestens tausendmal größere Abmessungen als das Ausgangspulver, vorzugsweise Abmessungen im Bereich von Zentimeter und darüber.

In der Regel wird jeweils nur ein Polymer verfahrensgemäß bearbeitet, es ist aber auch möglich, zwei oder mehr Polymere gleichzeitig in derselben Vorrichtung zu verarbeiten.

Durch die Verbesserung des Siebvorgangs wird der Feinanteil kleiner 10µm im finalen Pulver minimiert. Dadurch kann ein zusätzlicher Schritt eines Entstaubens entfallen. Es wird der Gesundheitsschutz bei der Verarbeitung und auch bei der späteren Weiterverarbeitung des finalen Pulvers, beispielsweise bei einem Endkunden, verbessert. Die Rieselfähigkeit des finalen Pulvers ist gegenüber finalem Pulver nach dem Stand der Technik erheblich verbessert. Da weniger Aggregatbildung stattfindet, was den Siebvorgang erleichtert, muss auch weniger Grobanteil wieder in den Zerkleinerungsschritt zurückgeführt werden. Die Erfindung ermöglicht es, den Anteil an Grobgut, der wieder in den Zerkleinerungsprozess zurückgeführt werden muss, deutlich zu verringern. Dies führt dazu, dass Partikel, die eigentlich schon die richtige Größe haben, noch einmal verkleinert werden, da der Anteil an Feinanteil mit jedem wiederholten Schritt des Zerkleinerns steigt. Ein Schritt des Entstaubens des Ausgangspulvers oder des finalen Pulvers kann zusätzlich durchgeführt werden, er ist erfindungsgemäß mit geringerem Aufwand durchführbar.

Das Verfahren eignet sich für Thermoplaste, die nach dem Zerkleinerungsschritt zu Klebrigkeit und Agglomeratbildung neigen. Es eignet sich auch für thermoplastische Polymere wie zum Beispiel PP, PA, PPS, ABS, PBT, PE, PS, PET, PMMA, PC, PEEK, PEKK. Besonders bevorzugt eignet sich das Verfahren für TPU, ester- und etherbasierte Thermoplaste, beispielsweise TPEE.

Das Trennmittel liegt vorzugsweise in ausgesprochen feinpulvriger Form vor. Es soll die Partikel des Ausgangspulvers staubförmig umhüllen und dadurch einen direkten Kontakt zwischen zwei benachbarten Partikeln des Ausgangspulvers vermeiden. Dadurch wird die Rieselfähigkeit des Ausgangspulvers erhöht. Das Trennmittel kann man auch als Additiv, Rieselhilfe oder Antiagglomeratmittel bezeichnen. Durch das Trennmittel wird die Fließfähigkeit des Ausgangspulvers verbessert. Es wird auch die Fließfähigkeit in der verfahrenstechnischen Anlage, also in deren Rohren, Zellenradschleusen usw. verbessert.

Besonders bevorzugte Trennmittel sind Metallstearate und Amidwachse. Die Schmelztemperatur des Trennmittels sollte vorzugsweise im Bereich zwischen 50 und 160 °C liegen.

Es ist möglich, das Ausgangspulver nach dem Schritt des Zerkleinerns aufzuwärmen. Dadurch kann der Schritt des Siebens des Ausgangspulvers von Fall zu Fall günstiger durchgeführt werden.

Vielfach wird eine Nachadditivierung wünscht. Diese erfordert nach dem Stand der Technik einen zusätzlichen Verfahrensschritt. Erfindungsgemäß ist ein solcher Schritt nicht mehr notwendig, da das Additiv bereits beim Schritt des Zerkleinerns zugefügt wird oder ein zusätzliches anderes Additiv, das zusätzlich zum Trennmittel vorgesehen ist, mit diesem zugefügt werden kann.

Es ist auch möglich, den Zerkleinerungsschritt zeitlich getrennt vom Schritt des Siebens durchzuführen. Als Siebe können vorzugsweise Siebe mit Langmaschen eingesetzt werden, beispielsweise ein Taumelsieb der Firma Allgaier AVTM1600 mit Langmasche 300x110 µm.

Zur Zerkleinerungsvorrichtung werden alle Bauteile gezählt, die sich vor der Siebvorrichtung befinden, also auch beispielsweise Zellenradschleusen, Förderpumpen usw..

### Beispiele:

Beispiel 1: In den Mahlkreis einer Wirbelstrommühle wird stückiges TPU eingegeben und zerkleinert. Es wird 1 Gew.% eines Amidwachses Baerolub L-AS der Firma Baerlocher (bezogen auf in die Mühle eingegebenes TPU) gemeinsam mit dem TPU eingeleitet. Die Mühle verteilt das Trennmittel beim Mahlprozess hervorragend im Ausgangspulver. Dabei scheint die schmierende Wirkung des Trennmittels von Vorteil zu sein.

Beispiel 2: Es wird vorgegangen wie im Beispiel 1, jedoch wird als Trennmittel nun 0,13 Gew.% eines Aluminiumoxids (Alu C) zugegeben. Es wird ein Schüttgewicht von 372 g/l für die Kornverteilung d90<125 µm, d50 zwischen 60 und 80 µm, d10 zwischen 20 und 30 µm erreicht.

Beispiel 3: Es wird vorgegangen wie Beispiel 2, jedoch wird als Trennmittel nun 2 Gew.% Ca-Stearat (114-36 L3 der Firma Valtris Speciality Chemicals) zugegeben. Es wird ein Schüttgewicht von 462 g/l für die angegebene Kornverteilung erreicht. Im Vergleich zum Beispiel 2 konnte die Durchsatzleistung der Siebvorrichtung um etwa 50 % gesteigert werden.

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die unter Bezugnahme auf die Zeichnung im Folgenden näher erläutert werden. In dieser Zeichnung zeigen:
- Figur 1: eine prinzipielle Darstellung einer Vorrichtung zum Zerkleinern eines thermoplastischen Polymers, das Zerkleinern erfolgt durch Aufschmelzen und Verdüsen, und
- Figur 2: eine prinzipielle Darstellung ähnlich Figur 1, jedoch nunmehr für eine Vorrichtung, bei der das Zerkleinern mechanisch durch eine Mühle erfolgt.
Zunächst wird die Vorrichtung gemäß Figur 1 beschrieben, die Vorrichtung gemäß Figur 2 wird nur insoweit beschrieben, als sich ihre Einzelteile von der Vorrichtung gemäß Figur 1 unterscheiden.

Als Granulat vorliegendes TPU wird in einem Schmelzebehälter 20 aufgeschmolzen. Aus dem Schmelzebehälter 20 wird es über eine Förderleitung 22, gefördert durch eine Pumpe 24, einem Behälter 26, der einen Sprühturm bildet, zugeführt. In diesem Behälter 26 befindet sich oben eine Düsenanordnung 28, der das schmelzflüssige Material zugeleitet wird. Aus ihren Düsenöffnungen tritt flüssiges Material aus, beispielsweise in Form von dünnen Fäden, die sich weiter unten zu Tröpfchen vereinzeln. Mit zunehmendem Abstand von der Düsenanordnung 28 werden die Tröpfchen runder und bilden sich aus ihnen frei fallende Partikel, sie fallen vertikal nach unten.

In den Behälter 26 ragt von oben neben der Förderleitung 22 eine Zuleitung 30 für Cryogas, insbesondere flüssiger Stickstoff. Die Zuleitung 30 ist mit einer Zuführeinheit 32 verbunden, die hier als Ring ausgeführt ist, der sich oberhalb und außerhalb der Düsenanordnung 28 befindet.

Aus der Düsenanordnung 28 tritt das polymere Material innerhalb eines Kegels 34 aus. Aus der Zuführeinheit 32 tritt das Cryogas in Form eines Kegelmantels 36 aus, der Kegel 34 befindet sich innerhalb des Kegelmantels 36. Der Kegel 34 ist so gerichtet, dass er möglichst nicht auf die seitlichen Wände des Behälters 26 trifft.

Im unteren Bereich des Behälters 26 befinden sich seitliche Düsen 38 oder eine ähnliche Vorrichtung zum Einleiten. Durch sie wird ein Trennmittel, ein Metallstearat, in den Innenraum des Behälters 26 so eingeleitet, siehe Pfeile, dass sich möglichst eine Schicht 40 des Trennmittels im unteren Bereich des Behälter 26 bildet. Durch diese Schicht 40 fallen die Tröpfchen hindurch und werden dadurch mehr oder weniger von dem Trennmittel umhüllt. Je nach Verfahrensführung fällt ein Teil des Trennmittels aus der Schicht 40 nach unten, dieser Anteil fällt auf den Bereich des Auslasses, der schräge Wände hat. Auf diese schrägen Wände treffen die Partikel auf, bevor sie langsam zum Tiefsten des Auslasses 42 gelangen. Die Partikel können damit auch vom Trennmittel umhüllt werden, wenn und während sie auf den schrägen Wänden aufliegen. Sie können auch mit Trennmittel umhüllt werden, während sie sich oberhalb der schrägen Wände und unterhalb der Schicht 40 befinden.

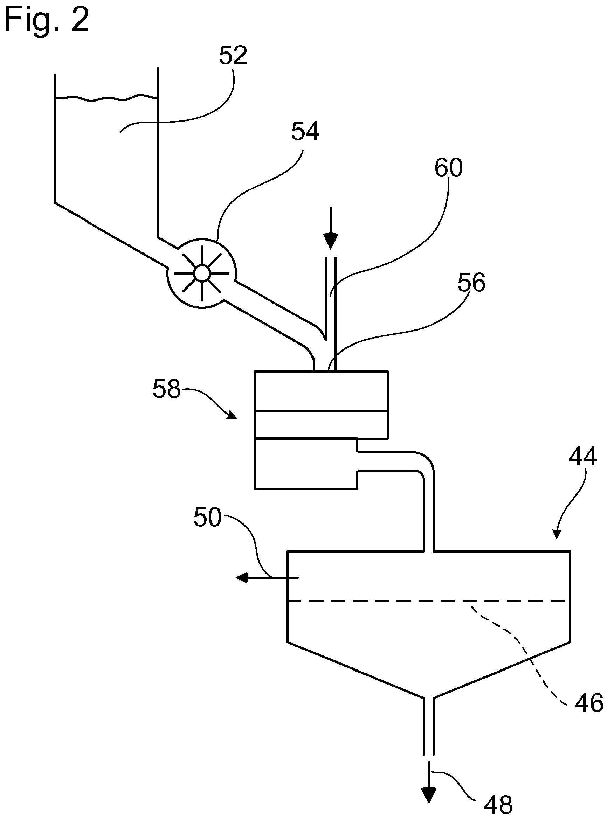

Im unteren Bereich des Behälters 26 hat dieser einen konisch geformten Auslass 42. Dort sind die umhüllten Tröpfchen so weit abgekühlt, dass sie im Wesentlichen nicht mehr verformbar sind, sie bilden das Ausgangspulver. Dieses gelangt nun in eine Siebvorrichtung 44. In einer Abwandlung kann eine Zellenradschleuse zwischengeschaltet sein, wie sie aus Figur 2 ersichtlich ist. Sie gehört zur Zerkleinerungsvorrichtung. In einer Abwandlung ist es möglich, das Trennmittel in diese Zellenradschleuse einzuspeisen.

Die Siebvorrichtung 44 ist nach dem Stand der Technik ausgeführt. Sie hat zur Vereinfachung der Darstellung nur ein Sieb 46. Von dem Sieb 46 wird die vorgegebene Körnerverteilung durchgelassen, siehe Pfeil 48, der Rest wird abgeleitet, siehe Pfeil 50.

In der Vorrichtung gemäß Figur 2 befindet sich TPU in Form von Granulat in einem Aufgabebehälter 52. Über eine Zellenradschleuse 54 wird das Granulat einem Eingang 56 einer Mühle 58, die hier als Stiftmühle ausgeführt ist, zugeleitet. In die Zuleitung zur Mühle 58 mündet zudem eine Leitung 60 für Trennmittel, in diesem Fall ein Amidwachs. Damit gelangen das Granulat und das Trennmittel gleichzeitig in den Eingang 56 der Mühle 58 und werden in der Mühle 58 während des Mahlvorgangs innig vermischt.

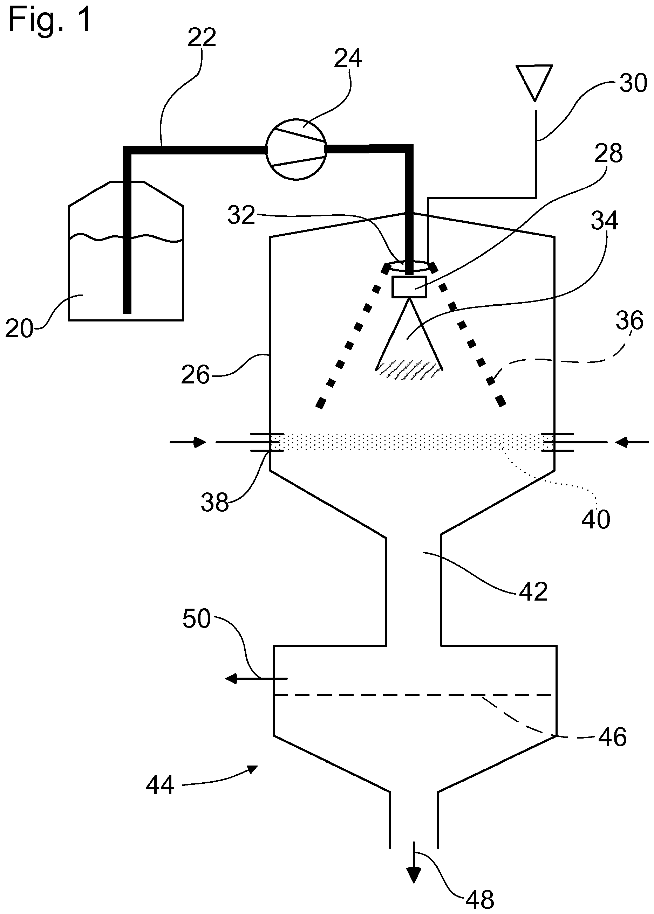

Ausgangsseitig liegen die Verhältnisse ähnlich wie in Figur 1 vor. Der Auslass 42 der Mühle 58 ist auch in diesem Fall direkt mit der Siebvorrichtung 44 verbunden. Begriffe wie im Wesentlichen, vorzugsweise und dergleichen sowie möglicherweise als ungenau zu verstehende Angaben sind so zu verstehen, dass eine Abweichung um plusminus 5 %, vorzugsweise plusminus 2 % und insbesondere plus minus ein Prozent vom Normalwert möglich ist. In den Figuren sind hinsichtlich ihrer Funktion gleichwertige Teile stets mit denselben Bezugszeichen versehen, sodass diese in der Regel auch nur einmal beschrieben werden.

### Bezugszeichen

- 20: Schmelzebehälter
- 22: Förderleitung
- 24: Pumpe
- 26: Behälter
- 28: Düsenanordnung
- 30: Zuleitung
- 32: Zuführeinheit
- 34: Kegel
- 36: Kegelmantel
- 38: Düse
- 40: Schicht
- 42: Auslass
- 44: Siebvorrichtung
- 46: Sieb
- 48: Pfeil
- 50: Pfeil
- 52: Aufgabebehälter
- 54: Zellenradschleuse
- 56: Eingang
- 58: Mühle
- 60: Leitung

## Patentansprüche

1. Verfahren zum Zerkleinern eines thermoplastischen Polymers und Herstellen eines pulverförmigen Stoffs mit einer vorgegebenen Kornverteilung daraus, mit den folgenden Verfahrensschritten:
- Vorgeben einer gewünschten Kornverteilung des pulverförmigen Stoffs,
- Zerkleinern des in stückiger Form vorliegenden thermoplastischen Polymers in einer Zerkleinerungsvorrichtung zu einem Ausgangspulver, das Körnchen umfasst,
- mindestens einmaliges Sieben dieses Ausgangspulvers, bis der pulverförmige Stoff mit der vorgegebenen Kornverteilung erreicht ist,
wobei bei dem Schritt des Zerkleinerns ein Trennmittel in die Zerkleinerungsvorrichtung eingeleitet wird, wobei das Trennmittel in feinpulvriger Form vorliegt und die Körnchen des Ausgangspulvers staubförmig umhüllt und dadurch die Klebrigkeit und Fähigkeit des Ausgangspulvers zur Agglomeratbildung des Ausgangspulvers herabsetzt,
wobei a) der Schritt des Zerkleinerns in einer der Zerkleinerungsvorrichtung zugehörigen Mühle durchgeführt wird und dabei ein Kühlmittel mit einer Temperatur < -50°C in die Zerkleinerungsvorrichtung eingeleitet wird, oder
b) der Schritt des Zerkleinerns einen Sprühturm verwendet, in dem das thermoplastische Polymer durch Schmelzen oder Auflösen und sodann Zerstäuben mittels mindestens einer Sprühdüse zerkleinert wird, wobei ein Kühlmittel mit einer Temperatur < -50°C in die Zerkleinerungsvorrichtung eingeleitet wird.

2. Verfahren nach Anspruch 1, **dadurch gekennzeichnet, dass** das Trennmittel ausgewählt ist aus mindestens einem der folgenden Gruppe: Tenside, Wachse, Metallseifen.

3. Verfahren nach Anspruch 1 oder 2, **dadurch gekennzeichnet, dass** das Trennmittel hydrophob ist.

4. Verfahren nach einem der vorangegangenen Ansprüche, **dadurch gekennzeichnet, dass** das Trennmittel eine Schmelzpunkttemperatur aufweist, die sich von der Temperatur des Schmelzpunktes des Polymers um maximal 30 °C unterscheidet.

5. Verfahren nach einem der vorangegangenen Ansprüche, **dadurch gekennzeichnet, dass** das Trennmittel zugeführt wird, bevor das Ausgangspulver fertig hergestellt ist.

6. Verfahren nach einem der vorangegangenen Ansprüche, **dadurch gekennzeichnet, dass** bei dem Schritt des Siebens mindestens ein mechanisch bewegtes Sieb (46) verwendet wird, nämlich ein vibrierendes Sieb (46), ein eine Taumelbewegung ausführendes Sieb (46), oder ein mittels Ultraschall angeregtes Sieb (46).

7. Verfahren nach einem der vorangegangenen Ansprüche, **dadurch gekennzeichnet, dass** das Trennmittel in einem Gewichtsanteil von maximal 5 % bezogen auf das Gewicht des thermoplastischen Polymers zugeführt wird.

8. Verfahren nach einem der vorangegangenen Ansprüche, **dadurch gekennzeichnet, dass** das Trennmittel in einem Gewichtsanteil von minimal 0,1, Gewichtsprozent bezogen auf das Gewicht des thermoplastischen Polymers, zugeführt wird.

9. Verfahren nach einem der vorangegangenen Ansprüche, **dadurch gekennzeichnet, dass** das thermoplastische Polymer bei Normaltemperatur eine Härte Shore A von kleiner 90 aufweist.

10. Vorrichtung zur Durchführung eines Verfahrens nach einem der Ansprüche 1 bis 9, die zum Zerkleinern eines thermoplastischen Polymers und zum Herstellen eines pulverförmigen Stoffes mit einer vorgegebenen Kornverteilung daraus eingerichtet ist, kennzeichnend aufweisend
- eine Zerkleinerungsvorrichtung für in stückiger Form vorliegende thermoplastische Polymere, die eine Mühle oder einen Sprühturm aufweist, und die einen Einlass für das thermoplastische Polymer, einen Auslass (42) für Ausgangspulver und eine Zuleitung (30) für ein Kühlmittel mit einer Temperatur < -50°C hat,
- und eine Siebvorrichtung (44), die hinter der Zerkleinerungsvorrichtung angeordnet ist und mit ihr über Rohrleitungen, in denen das Ausgangspulver gefördert wird, verbunden ist, wobei die Siebvorrichtung (44) mindestens ein Sieb (46) aufweist, das für die vorgegebene Kornverteilung ausgelegt ist,
wobei die Zerkleinerungsvorrichtung ein Mittel für ein Einleiten eines Trennmittels in die Zerkleinerungsvorrichtung aufweist.

## Claims

1. Method for comminuting a thermoplastic polymer, and for producing a powdery substance with a predefined grain distribution therefrom, having the following method steps:
- predefining a desired grain distribution of the powdery substance,
- comminuting the thermoplastic polymer, provided in lump form, in a comminution apparatus to produce a starting powder comprising grains,
- sieving said starting powder at least once until the powdery substance with the predefined grain distribution is obtained,
wherein a release agent is introduced into the comminution apparatus in the comminution step, wherein the release agent has the form of a fine powder and coats the grains of the starting powder in the manner of dust, thereby reducing the starting powder's tack and agglomerate formation capability,
wherein a) the comminution step is carried out in a mill that is part of the comminution apparatus and during this process a coolant is fed into the comminution apparatus at a temperature < -50°C, or
b) the comminution step uses a spray tower, in which the thermoplastic polymer is comminuted by melting or dissolving and then atomising by means of at least one spray nozzle, wherein an coolant is fed into the comminution apparatus at a temperature < -50°C.

2. Method according to Claim 1, **characterized in that** the release agent is selected from at least one from the following group: surfactants, waxes, metallic soaps.

3. Method according to Claim 1 or 2, **characterized in that** the release agent is hydrophobic.

4. Method according to any one of the preceding claims, **characterized in that** the release agent has a melting point temperature differing from the melting point temperature of the polymer by not more than 30°C.

5. Method according to any one of the preceding claims, **characterized in that** the release agent is supplied before the production of the starting powder is completed.

6. Method according to any one of the preceding claims, **characterized in that** at least one mechanically moved sieve (46), in particular a vibrating sieve (46), a sieve (46) that performs a tumbling motion, or a sieve (46) which is excited by ultrasound, is used in the sieving step.

7. Method according to any one of the preceding claims, **characterized in that** the release agent is supplied in a percentage by weight not exceeding 5% relative to the weight of the thermoplastic polymer.

8. Method according to any one of the preceding claims, **characterized in that** the release agent is supplied in a percentage by weight not less than 0.1 percent by weight relative to the weight of the thermoplastic polymer.

9. Method according to any one of the preceding claims, **characterized in that** the thermoplastic polymer has a Shore A hardness less than 90 at normal temperature.

10. Apparatus for carrying out the method according to any one of Claims 1 to 9, which is configured for comminuting a thermoplastic polymer and producing a powdery substance with a predefined grain distribution, having as characterizing features
- a comminution apparatus for thermoplastic polymers provided in lump form, which includes a mill or a spray tower, and which has an inlet for the thermoplastic polymer, an outlet (42) for starting powder, and a feed line (30) for a coolant with a temperature < -50°C,
- and a sieving apparatus (44) which is disposed downstream of the comminution apparatus and connected thereto via pipelines in which the starting powder is conveyed, wherein the sieving apparatus (44) has at least one sieve (46) which is designed for the predefined grain distribution,
wherein the comminution apparatus has a means for introducing a release agent into the comminution apparatus.

## Revendications

1. Procédé permettant de fragmenter un polymère thermoplastique et d'en produire une matière pulvérulente ayant une granulométrie prédéfinie, comportant les étapes de procédé suivants :
- prédéfinir une granulométrie souhaitée pour ladite matière pulvérulente,
- fragmenter ledit polymère thermoplastique, qui se présente sous forme de morceaux, dans un dispositif de fragmentation, pour ainsi obtenir une poudre de base comprenant de petits grains,
- tamiser, au moins une fois, cette poudre de base jusqu'à ce que la matière pulvérulente atteigne la granulométrie prédéfinie,
un anti-agglomérant étant introduit dans le dispositif de fragmentation lors de l'étape de fragmentation, ledit anti-agglomérant se présentant sous forme d'une poudre fine et englobant les petits grains de la poudre de base pour ainsi diminuer le caractère collant de la poudre de base et la capacité de la poudre de base à s'agglutiner,
a) l'étape de fragmentation étant réalisée dans un moulin associé au dispositif de fragmentation tout en introduisant dans le dispositif de fragmentation un agent de refroidissement ayant une température < -50 °C, ou bien
b) l'étape de fragmentation mettant en œuvre une tour d'atomisation dans laquelle le polymère thermoplastique est fragmenté en le faisant fondre ou en le dissolvant pour ensuite l'atomiser au moyen d'au moins une buse d'atomisation, tout en introduisant dans le dispositif de fragmentation un agent de refroidissement ayant une température < -50 °C.

2. Procédé selon la revendication 1, **caractérisé en ce que** ledit anti-agglomérant est choisi parmi au moins un issu groupe suivant : agents tensioactifs, cires, savons de métaux.

3. Procédé selon les revendications 1 ou 2, **caractérisé en ce que** ledit anti-agglomérant est hydrophobe.

4. Procédé selon l'une des revendications précédentes, **caractérisé en ce que** ledit anti-agglomérant présente une température de point de fusion qui diffère au maximum de 30 °C de la température du point de fusion du polymère.

5. Procédé selon une des revendications précédentes, **caractérisé en ce que** ledit anti-agglomérant est ajouté avant que la production de la poudre de base ne soit terminée.

6. Procédé selon l'une des revendications précédentes, **caractérisé en ce qu'**on met en oeuvre, lors de l'étape de tamisage, au moins un tamis (46) agité mécaniquement, à savoir un tamis (46) vibrant, un tamis (46) effectuant un mouvement oscillant ou un tamis (46) agité par des ultrasons.

7. Procédé selon l'une des revendications précédentes, **caractérisé en ce que** ledit anti-agglomérant est ajouté dans une proportion pondérale de 5 % au maximum, par rapport au poids du polymère thermoplastique.

8. Procédé selon l'une des revendications précédentes, **caractérisé en ce que** ledit anti-agglomérant est ajouté dans une proportion pondérale de 0,1 % au minimum, par rapport au poids du polymère thermoplastique.

9. Procédé selon l'une des revendications précédentes, **caractérise en ce que** le polymère thermoplastique présente, à la température normale, une dureté Shore A inférieure à 90.

10. Dispositif permettant de mettre en œuvre un procédé selon l'une des revendications 1 à 9, lequel est conçu pour fragmenter un polymère thermoplastique et pour en produire une matière pulvérulente ayant une granulométrie prédéfinie, **caractérisé en ce qu'**il comporte
- un dispositif de fragmentation pour polymères thermoplastiques se présentant sous forme de morceaux, lequel comporte un moulin ou une tour d'atomisation et lequel présente une entrée pour le polymère thermoplastique, une sortie (42) pour ladite poudre de base et une conduite (30) destinée à un agent de refroidissement ayant une température < -50 °C,
- et un dispositif de tamisage (44) qui est disposé en aval du dispositif de fragmentation et relié à ce dernier au travers de conduites tubulaires dans lesquelles la poudre de base est transportée, le dispositif de tamisage comportant au moins un tamis (46) qui est conçu pour la granulométrie prédéfinie,
le dispositif de fragmentation comportant un moyen permettant d'introduire un anti-agglomérant dans le dispositif de fragmentation.
